# EUROPÄISCHE PATENTSCHRIFT

(11) **EP 3 858 203 B1**
(45) Veröffentlichungstag und Bekanntmachung des Hinweises auf die Patenterteilung: **13.11.2024**
(21) Anmeldenummer: 20214416.8
(22) Anmeldetag: 16.12.2020
(51) Int. Cl.: A47J 36/32, A47J 36/02, F24C 7/08

(54) **KOCHGESCHIRR, KOCHSYSTEM UND VERFAHREN ZUM BETREIBEN**
COOKWARE, COOKING SYSTEM AND METHOD FOR OPERATING SAME
RÉCIPIENT DE CUISSON, SYSTÈME DE CUISSON ET PROCÉDÉ DE FONCTIONNEMENT

(30) Priorität: 28.01.2020 DE 102020101983
(43) Veröffentlichungstag der Anmeldung: 04.08.2021
(73) Patentinhaber: Miele & Cie. KG, 33332 Gütersloh (DE)
(72) Erfinder: Ebke, Daniel, 33613 Bielefeld (DE); Gehring, Nils Marius, 33739 Bielefeld (DE); Müller, Christoph, 32289 Rödinghausen (DE); Niermann, Franziska, 33739 Bielefeld (DE)

(56) Entgegenhaltungen:
- CN-A- 109 475 246
- US-A1- 2013 305 933
- US-A1- 2019 339 132
- US-B2- 10 085 584

## Beschreibung

Die vorliegende Erfindung betrifft ein Verfahren zum Betreiben eines Kochsystems. Die vorliegende Erfindung betrifft zudem ein Kochsystem umfassend eine Steuereinrichtung zur Durchführung des Verfahrens.

Automatisierte und teilautomatisierte Programme und auch unterstützende Funktionen sind bei Haushaltgeräten bekannt geworden. Gerade bei Gargeräten sind automatische oder unterstützende Programme bekannt, welche einen Benutzer bei der Zubereitung von Speisen unterstützen. So kann beispielsweise bei Gargeräten mit einem Garraum, beispielsweise bei einem Backofen, ein bestimmtes Gargut in den Garraum eingestellt werden und ein Programm hierfür eingestellt werden. Hier kann beispielsweise ein Automatikprogramm für ein bestimmtes Lebensmittel ausgewählt werden. Der Garprozess wird dann oft über verschiedene Verfahren und Systeme überwacht. Je nach Ausgestaltung kann auch das Gargut automatisch erkannt werden und es erfolgt dann eine automatische Einstellung eines geeigneten Garprogramms.

Beispielsweise ist in der Druckschrift US 10 085 584 B2 gelehrt wie in einem Kochgeschirr ein Verfahren zum sous vide Garen durchgeführt werden kann.

Aus der Druckschrift US 2019 339 132 A1 ist ein Kochgeschirr bekannt, welches über mehrere Sensoren zur Erfassung der Temperatur in unterschiedlichen Höhen verfügt. So ein Kochgeschirr zeigt auch die Druckschrift US 2013 305 933 A1. Sensoren zur Erfassung der Temperatur können in einer Wandung eines Kochgeschirrs angeordnet sein, wie die Druckschrift CN 109 475 246 A zeigt.

Vorteilhaft wäre es, wenn ein Benutzer auch beim Erwärmen bzw. Erhitzen von Speisen in einem auf einem Kochfeld aufstehenden Kochgeschirr wie z. B. einem Topf, einer Pfanne oder dergleichen unterstützt werden könnte oder wenn sogar ein automatisches Erhitzen erfolgen würde. Dabei sollte insbesondere das Ansetzen oder sogar Anbrennen von dem Lebensmittel in dem Topf bzw. an dem Topfboden vermieden werden.

Es ist daher die Aufgabe der vorliegenden Erfindung, einen Benutzer beim Erhitzen von Gargut in einem Kochgeschirr zu unterstützen.

Diese Aufgabe wird gelöst durch ein Verfahren mit den Merkmalen des Anspruchs 1 und durch ein Kochsystem mit den Merkmalen des Anspruchs 8. Bevorzugte Weiterbildungen der Erfindung sind Gegenstand der abhängigen Ansprüche. Weitere Vorteile und Merkmale der Erfindung ergeben sich aus den Ausführungsbeispielen.

Bei dem erfindungsgemäßen Verfahren und bei dem erfindungsgemäßen Kochsystem kommt ein Kochgeschirr zur Verwendung. Dieses umfasst wenigstens einen Boden und wenigstens eine Wandung, wobei durch den Boden und die Wandung wenigstens ein Aufnahmevolumen begrenzt wird. Dabei sind wenigstens zwei Temperatursensoren der Wandung zugeordnet, wobei ein erster Temperatursensor in einer ersten Höhe vorgesehen ist und wobei wenigstens ein zweiter Temperatursensor in einer zweiten Höhe mit einem vorbestimmten Abstand zu dem ersten Temperatursensor vorgesehen ist.

Unter den Höhen, in welchen die Temperatursensoren angeordnet sind, ist insbesondere der Abstand in Bezug auf den Boden des Kochgeschirrs zu verstehen. Dabei ist der erste Temperatursensor insbesondere näher an dem Boden des Kochgeschirrs angeordnet als der zweite Sensor.

Das Kochgeschirr ist insbesondere für den Induktionsbetrieb vorgesehen. Dementsprechend kann über das Einbringen und Wegnehmen von Leistung eine schnelle Änderung der Temperatur erreicht werden. Das Kochgeschirr kann aber auch als konventionelles Kochgeschirr ausgestaltet sein.

Unter einem Kochgeschirr wird insbesondere jedes Gefäß verstanden, welches zum Erwärmen von Lebensmitteln auf ein Kochfeld bzw. eine Kochfeldeinrichtung aufgestellt werden kann, wie beispielsweise Töpfe, Pfannen, Bräter und dergleichen.

Wenn mehr als zwei Temperatursensoren vorgesehen sind, sind diese vorzugsweise jeweils in einer unterschiedlichen Höhe angeordnet. So kann insbesondere der erste Sensor möglichst nah am Boden des Kochgeschirrs bzw. möglichst tief an der Wandung bzw. in der Wandung vorgesehen sein und jeder weitere Temperatursensor weist einen größeren Abstand zu dem ersten Temperatursensor auf.

Insbesondere liegen die Temperatursensoren höhenmäßig übereinander. Hierunter ist insbesondere zu verstehen, dass sie Sensoren über den Umfang des Kochgeschirrs nicht verteilt, sondern an der gleichen Stelle nur in einer anderen Höhe angeordnet sind. Wenn beispielsweise die Höhe als Abstand senkrecht zu der Erstreckungsebene des Bodens definiert wird, dann liegen die Sensoren vorzugsweise in einer Ausrichtungsebene, welche senkrecht zu der Erstreckungsebene des Bodens orientiert ist.

Der Abstand zwischen den wenigstens zwei Sensoren bzw. die Höhenanordnung dieser Sensoren ist vorzugsweise so gewählt, dass wenigstens zwei Sensoren von Gargut bedeckt sind. Dabei kann insbesondere anhand einer normalerweise maximalen bzw. minimalen Füllhöhe des Kochgeschirrs die Position der Sensoren abgeleitet werden. Wäre nur ein Temperatursensor beim Kochvorgang bedeckt, könnte auch nur die Temperaturkurve dieses Sensors für Ableitungen aus der ermittelten Temperatur verwendet werden.

Vorzugsweise ist der wenigstens zweite Sensor mit dem größeren Abstand zum Boden im Bereich zwischen dem unteren Viertel und dem oberen Viertel der vertikalen Erstreckung der Wandung angeordnet, also nicht im unteren Viertel und dem oberen Viertel der vertikalen Erstreckung der Wandung. Besonders bevorzugt ist der zweite Sensor im Bereich der halben Höhe der Wandung angeordnet, wobei der Bereich der halben Höhe durch das mittlere Fünftel, mittlere Sechstel, mittlere Siebtel oder mittlere Achtel der vertikalen Erstreckung der Wandung definiert ist.

Je nach Ausgestaltung kann der Abstand zwischen den Temperatursensoren vorteilhaft gewählt werden. Insbesondere ist ein Abstand zwischen 1 cm und 6 cm, vorzugsweise zwischen 2 cm und 4 cm und insbesondere ca. 3 cm. Je nach Ausgestaltung können auch andere Abstände vorteilhaft sein.

Bei mehr als zwei Temperatursensoren ist wenigstens ein Sensor im Bereich zwischen dem unteren Viertel und dem oberen Viertel, insbesondere im Bereich der halben Höhe vorgesehen.

Die Temperatursensoren, welche der Wandung des Kochgeschirrs zugeordnet sind, können vorzugsweise außen an der Wandung, innen an der Wandung oder in die Wandung integriert vorgesehen sein, wobei jeweils auch eine abnehmbare oder festverbaute Variante je nach Ausgestaltung vorteilhaft vorgesehen sein kann.

Das Kochgeschirr bietet viele Vorteile. Ein erheblicher Vorteil ist, dass durch das Vorsehen von wenigstens zwei Temperatursensoren der Verlauf der Temperatur an zwei unterschiedlichen Stellen der Wandung des Kochgeschirrs ermittelt werden kann. Da die beiden ermittelten Temperaturen, Temperaturverläufe oder die Temperaturdifferenz die Entwicklung der Temperatur über die Höhe des Kochgeschirrs erfasst, können beispielsweise beim Erhitzen von Lebensmitteln und insbesondere von Flüssigkeiten oder flüssigen Lebensmitteln Rückschlüsse über den Temperaturverlauf innerhalb des Kochgeschirrs gezogen werden. So kann je nach Ausgestaltung beispielsweise in Verbindung mit einer geeigneten Kochfeldeinrichtung das Erhitzen bzw. Aufwärmen von Lebensmitteln kontrolliert undloder unterstützt undloder sogar automatisch erfolgen. Zudem kann je nach Ausgestaltung auch über die ermittelten Temperaturen undloder den Temperaturverlauf ermittelt werden, was für ein Lebensmittel in dem Kochgeschirr erhitzt wird.

Bevorzugt sind die Temperatursensoren wenigstens abschnittsweise in die Wandung integriert. Dabei ist insbesondere bevorzugt, dass die Temperatursensoren vollständig in die Wandung integriert sind und/oder nicht trennbar mit der Wandung verbunden sind.

Besonders bevorzugt ist der erste Temperatursensor in der Nähe des Bodens vorgesehen. Dabei ist insbesondere bevorzugt, dass der erste Temperatursensor möglichst nah am Boden, vorzugsweise im Übergang zwischen dem Boden und der Wandung angeordnet ist. Bevorzugt ist der erste Temperatursensor im unteren Fünftel, Sechstel oder Siebtel der vertikalen Erstreckung der Wandung vorgesehen.

In zweckmäßigen Weiterbildungen ist wenigstens eine Kommunikationseinrichtung vorgesehen. Eine solche Kommunikationseinrichtung stellt vorzugsweise die Verbindung zwischen den Temperatursensoren und einer Kochfeldeinrichtung bereit. Dabei kann eine solche Kommunikationseinrichtung beispielsweise mit den Temperatursensoren verbunden sein und die Temperaturen von den Temperatursensoren erfassen und über eine geeignete Datenübertragung an die Kochfeldeinrichtung übermitteln. Je nach Ausgestaltung kann auch eine Auswerteeinrichtung von der Kommunikationseinrichtung umfasst sein, welche beispielsweise die erfassten Daten bzw. die ermittelten Temperaturen prozessiert und beispielsweise die Temperaturdifferenz zu bestimmten Zeitpunkten ermittelt und dann diese an die Kochfeldeinrichtung überträgt. So ist es je nach Ausgestaltung möglich, dass beispielsweise über ein Funkmodul, über Bluetooth oder eine andere geeignete Datenverbindung die Rohdaten, weiterverarbeitete Daten wie beispielsweise die Temperaturdifferenz zwischen Temperatursensoren oder auch direkt eine Regelgröße an das Kochfeld übermittelt wird.

Das erfindungsgemäße Kochsystem umfasst wenigstens ein Kochgeschirr, wie es zuvor beschrieben wurde und wenigstens eine Kochfeldeinrichtung. Dabei umfasst die Kochfeldeinrichtung wenigstens eine Aufstellfläche zum Aufstellen von Kochgeschirr, wenigstens eine Heizeinrichtung und wenigstens eine Steuereinrichtung. Dabei die Steuereinrichtung insbesondere in Wirkverbindung zu der Kommunikationseinrichtung des Kochgeschirrs vorgesehen. Erfindungsgemäß ist die Steuereinrichtung dazu geeignet und ausgebildet, einen Garprozess über die von dem Kochgeschirr ermittelten Temperaturen der Temperatursensoren bzw. über die ermittelten Temperaturdifferenz zwischen wenigstens zwei Temperatursensoren über das Anpassen der Leistung der Heizeinrichtung zu steuern und oder über die ermittelten Temperaturen der Temperatursensoren bzw. die Temperaturdifferenz zwischen wenigstens zwei Temperatursensoren Rückschlüsse auf das Gargut in dem Kochgeschirr zu ziehen.

Dabei kann ein Garprozess bzw. ein Leistungsverlauf der Heizeinrichtung vorzugsweise über die ermittelten Daten gesteuert undloder geregelt werden.

Das erfindungsgemäße Kochsystem bietet die zuvor schon beschriebenen Vorteile des erfindungsgemäßen Kochgeschirrs. Insbesondere kann über die Auswertung der ermittelten Temperaturen der wenigstens zwei Temperatursensoren ein Garprozess über das entsprechende Einstellen der Leistung gesteuert werden undloder es können über die ermittelten Daten Rückschlüsse über das in dem Kochgeschirr befindliche Gargut gezogen werden.

Das erfindungsgemäße Verfahren eignet sich zum Betreiben eines Kochsystems umfassend wenigstens ein Kochgeschirr und wenigstens eine Kochfeldeinrichtung. Dabei umfasst die Kochfeldeinrichtung wenigstens eine Aufstellfläche zum Aufstellen von Kochgeschirr, wenigstens eine Heizeinrichtung und wenigstens eine Steuereinrichtung. Das Kochgeschirr weist wenigstens einen Boden und wenigstens eine Wandung auf, wobei durch den Boden und die Wandung wenigstens ein Aufnahmevolumen begrenzt wird und wobei wenigstens zwei Temperatursensoren der Wandung zugeordnet sind. Dabei ist ein erster Temperatursensor in einer ersten Höhe vorgesehen und ein zweiter Temperatursensor ist in wenigstens einer zweiten Höhe vorgesehen. Der erste Sensor weist zu dem zweiten Sensor wenigstens einen vorbestimmten Abstand auf. Dieses Verfahren ist gekennzeichnet durch die folgenden Schritte in geeigneter Anzahl und Reihenfolge. Das Kochgeschirr wird bei einer vorbestimmten Leistung der Heizeinrichtung beheizt, bis ein vorbestimmter erster Schwellwert einer Temperaturdifferenz zwischen wenigstens zwei Temperatursensoren erreicht wird. Die Leistung der Heizeinrichtung wird reduziert, bis ein zweiter vorbestimmter Schwellwert einer Temperaturdifferenz zwischen den zwei Temperaturtemperatursensoren erreicht wird.

Dieses Verfahren eignet sich insbesondere zum Betreiben eines Kochsystems umfassend ein eine Kochfeldeinrichtung ein erfindungsgemäßes Kochgeschirr, wies zuvor beschrieben wurde.

Gemäß einem weiteren Aspekt des Verfahrens kann anhand der zu wenigstens einem vorbestimmten Zeitpunkt von den Temperatursensoren ermittelten Temperaturen undloder anhand der Temperaturdifferenz an wenigstens einem vorbestimmten Zeitpunkt zwischen dem ersten Temperatursensor und dem wenigstens zweiten Temperatursensor werden Rückschlüsse auf das Gargut in dem Kochgeschirr gezogen werden.

Das zuvor beschriebene Verfahren kann insbesondere in Verbindung mit einem Kochgeschirr durchgeführt werden, wie es zuvor in der Anmeldung beschrieben wurde.

Dabei weisen unterschiedliche Lebensmittel unterschiedliche Eigenschaften in der Wärmeübertragung auf. So können sich die Temperaturverläufe abhängig vom Lebensmittel erheblich unterscheiden. Hierbei kommt es insbesondere darauf an, wie wässrig bzw. wie viskos das Gargut ist bzw. welchen Fettanteil das Gargut in dem Kochgeschirr hat. So verhält sich die Wärmeverteilung in einem Topf und somit der Verlauf der Temperatur an den wenigstens zwei Temperatursensoren erheblich unterschiedlich, wenn man beispielsweise das Erhitzen von Wasser und Milch betrachtet.

Je nach Viskosität und Wärmeleitfähigkeit ergeben sich unterschiedliche Temperaturkurven bzw. Temperaturdifferenzen zu bestimmten Zeitpunkten während des Erhitzens. So erfolgt beim Erhitzen von Wasser bereits zu Beginn ein relativ guter Wärmeübergang in einen höheren Bereich des Topfes hinein. Dadurch, dass Wasser eine sehr geringe Viskosität aufweist, vermischt sich das am Topfboden erwärmte Wasser relativ schnell mit dem umgebenden Wasser und warmes Wasser steigt auf, wobei kaltes Wasser von oben nach unten fällt. Hierdurch kann es beispielsweise sogar passieren, dass zeitweise an dem unteren Sensor eine geringere Temperatur vorliegt als einem oberen Temperatursensor.

Im Unterschied dazu ist Milch viel viskoser als Wasser bzw. weist einen wesentlich höheren Fettanteil auf. Zu Beginn des Aufwärmens von Milch ist durch den hohen Fettanteil eine schlechtere Wärmeleitfähigkeit geben, bis durch das sicher wärmende Fett eine geringere Viskosität entsteht, wodurch dann eine bessere Vermischung der Milch bzw. eine bessere Wärmeleitfähigkeit vorliegt.

Die Ermittlung des Garguts bzw. die Rückschlüsse auf das Gargut können über den Verlauf der Temperatur bzw. der Temperaturdifferenz erfolgen oder auch über die Betrachtung eines charakteristischen Werts zu einem bestimmten Zeitpunkt. Dabei kann dieser charakteristische Wert vorzugsweise für unterschiedliche Lebensmittel unterschiedlich sein.

Je nach zu erwärmendem Lebensmittel können die Unterschiede zwischen den Temperaturen der beiden Temperatursensoren sich erheblich unterscheiden. Relativ geringe Unterschiede gibt es beispielsweise Wasser. Extrembeispiele für extrem unterschiedliche Werte an den Temperatursensoren insbesondere zu Beginn ist beispielsweise das Aufwärmen von passierten Tomaten oder auch von gebundenen Saucen.

Auch das erfindungsgemäße Verfahren bietet die Vorteile, die zuvor schon zu dem Kochgeschirr und dem Kochsystem erläutert wurden. Insbesondere können über die Verwendung von wenigstens zwei Temperatursensoren Rückschlüsse auf das in einem Kochgeschirr befindliche Lebensmittel gezogen werden.

Bevorzugt werden über den Verlauf der Temperaturdifferenz zwischen dem ersten Temperatursensor und dem zweiten Temperatursensor undloder über den Verlauf der Temperaturen an den Sensoren Rückschlüsse auf das Gargut im Kochgeschirr gezogen.

Besonders bevorzugt wird wenigstens zeitweise wenigstens ein Leistungsverlauf der Heizeinrichtung entsprechend für das erkannte Lebensmittel angepasst. So kann insbesondere erreicht werden, dass ein automatisches Erhitzen des Lebensmittels durch ein Automatikprogramm oder als Unterstützung für einen Benutzer verwendet werden kann.

In zweckmäßigen Weiterbildungen wird eine bestimmte Zeitspanne bei einer bestimmten Leistung betrachtet. So kann beispielsweise zu Beginn eines Garvorgangs bzw. beim Aufwärmen eines Kochgeschirrs mit voller Leistung für eine vorbestimmte Zeit, beispielsweise 1 Minute, 2 Minuten 3 Minuten oder auch mehr vorgesehen sein. Wenn innerhalb dieser Zeit eine charakteristische Temperatur, eine charakteristische Temperaturdifferenz oder ein charakteristischer Verlauf einer Temperatur undloder einer Temperaturdifferenz erkannt wird, kann eine entsprechende Steuerung der Leistung der Heizeinrichtung vorgenommen werden. In allen Fällen sollte verhindert werden, dass es durch ein zu langes Einstellen einer zu hohen Leistung ist zum Ansetzen und/oder zum Anbrennen von einem Lebensmittel im Kochgeschirr bzw. am Boden des Kochgeschirrs kommt.

Insbesondere ist der zweite Schwellwert niedriger als der erste Schwellwert. So ist es insbesondere bevorzugt, dass zunächst bei einer relativ hohen Leistung, einer höheren Leistung oder sogar der maximalen Leistung der Heizeinrichtung das Kochgeschirrs beheizt wird. Wird der erste Schwellwert einer Temperaturdifferenz zwischen zwei Temperatursensoren erreicht bzw. festgestellt, wird die Leistung reduziert oder sogar vollständig ausgestellt bzw. weggenommen, sodass sich die Temperatur im Kochgeschirr ausgleichen kann. Wird ein zweiter Schwellwert erkannt bzw. erreicht, welcher insbesondere niedriger als der erste Schwellwert ist, kann die Leistung wieder erhöht oder angestellt werden.

Ein erheblicher Vorteil dieses Verfahrens ist, dass durch die Regulierung der Leistung anhand von Schwellwerten, welche durch die Temperaturen an den Temperatursensoren erkannt werden, ein Automatikprogramm zum Erhitzen des Inhalts eines Kochgeschirrs bereitgestellt werden kann oder aber zumindest eine Unterstützung eines Benutzers beim Erwärmen von Lebensmitteln zur Verfügung gestellt werden kann.

Bevorzugt wird die Leistungsheizeinrichtung zwischen zwei vorbestimmten Leistungen beim Erreichen der Schwellwerte umgeschaltet. So wird insbesondere ein Zweipunktregler zur Verfügung gestellt, welcher besonders einfach zu realisieren ist. Dabei sind bei dieser Ausgestaltung zwei Stellgrößen vorgesehen. So können die Stellgrößen beispielsweise Leistung und keine Leistung bedeuten oder durch zwei vorbestimmten Leistungen vorgegeben werden.

Je nachdem, ob die Regelgröße einen Schwellwert unter- oder überschritten hat, hat die Stellgröße den ersten oder den zweiten Wert. Wenn die Temperaturdifferenz zwischen den beiden Temperatursensoren einen bestimmten Wert überschreitet, wird eine bestimmte Leistung ausgegeben, die niedriger ist als die zuvor bzw. initial eingestellte Größe.

Die beiden Schwellwerte unterscheiden sich insbesondere voneinander, damit die ausgegebene Leistung bei einer festen Schwelle nicht springen kann. Ein solcher Zweipunktregler lässt sich zum Beispiel schaltungstechnisch sehr einfach und mit wenigen Bauteilen realisieren.

Bevorzugt wird die Leistung der Heizeinrichtung im Wesentlichen kontinuierlich eingestellt. Dabei ist insbesondere vorgesehen, dass die Temperatur in Richtung eines Schwellwertes optimiert wird. Dabei wird insbesondere ein sogenannter PID-Regler zur Verfügung gestellt, der seine Stellgröße in Abhängigkeit von der Differenz zwischen Sollwert und Istwert der Regelgröße anpasst. Die Stellgröße kann dabei quasi eine unendliche Menge an möglichen Werten annehmen. Relevant sind dabei der Abstand zwischen Soll- und Istwert bzw. ist der Abstand zu einem Schwellwert bzw. die Geschwindigkeit mit der sich die Temperatur dem Schwellwert nähert. So kann mittels eines PID-Reglers eine Temperatur bzw. Temperaturdifferenz der beiden Temperatursensoren regeln, sodass diese möglichst konstant ist.

Gemäß einem Aspekt der Erfindung kann die initiale oder laufende Kontrolle der Zuordnung von Gargefäß und Kochfeldeinrichtung, insbesondere Heizeinrichtung bzw. Kochstelle der Kochfeldeinrichtung, durch eine Erfassung der Änderung der Temperatur an wenigstens einem der Sensoren im Gargefäß erfolgen. Bevorzugt werden hier die Daten des zumindest einen Sensors im Gargefäß herangezogen, welcher in Gebrauchsstellung des Gargefäßes der Heizeinrichtung am nächsten ist. Dabei ist vorgesehen, dass von der Heizeinrichtung für einen kurzen Zeitraum von maximal einer Minute, vorzugsweise von weniger als 20 Sekunden eine Prüf-Leistung in das Gargefäß gegeben wird. Die Prüf-Leistung ist höher als die aktuell eingestellte Leistung der Heizeinrichtung. Vorzugsweise ist die Prüf-Leistung mindestens 30 Prozent undloder 500 Watt höher als die aktuell eingestellte Leistung der Heizeinrichtung.

Besonders bevorzugt ist die Prüf-Leistung größer als 2.000 Watt. Mittels der Erfassung der Reaktion wenigstens eines Sensors oder mehrerer Sensoren im Gargefäß auf diese kurze Leistungsanhebung ist eine Zuordnung des beweglichen Gargefäßes zu der ortsfest verbauten Heizeinrichtung möglich.

Diese kurze Leistungsanhebung zur Erfassung und Validierung der Position des Gargefäßes auf der Kochfeldeinrichtung bzw. der Zuordnung von Gargefäß und Heizeinrichtung erfolgt zumindest kurz vor undloder kurz nach Beginn eines Garprozesses. Es ist weiterhin möglich, dass die kurze Leistungsanhebung auch während eines Garprozesses in festen zeitlichen Intervallen undloder ausgelöst von Einstellungsänderungen an der Kochfeldeinrichtung und/oder ausgelöst von erfassten Sensorwerten der Kochfeldeinrichtung oder eines Gargefäßes durchgeführt wird.

Darüber hinaus ist es möglich diese kurze Leistungsanhebung herangezogen wird um die Viskosität des Gargutes in dem Gargefäß zu erfassen. Je synchroner zwei, in unterschiedlichen Höhen des Gargefäßes vorgesehene Sensoren auf die Leistungsanhebung reagieren, desto geringer ist die Viskosität. Vorzugsweise kann gerade durch die frühe Leistungsanhebung zu Beginn des Garprozesses oder sogar vor Beginn eines Garprozesses sehr früh die Viskosität das Gargutes erkennen und ein für den Garprozess passender Regler starten.

In zweckmäßigen Weiterbildungen wird wenigstens ein Schwellwert anhand eines eingestellten und oder erkannten Lebensmittels angepasst. So kann beispielsweise wie in den zuvor beschriebenen Verfahren über charakteristische Werte der Temperaturen oder Temperaturdifferenzen erkannt werden, welches Lebensmittel in dem Kochgeschirr erhitzt wird. Ist ein bestimmtes Lebensmittel erkannt worden, können besonders geeignete Schwellwerte für das Lebensmittel eingestellt werden.

In zweckmäßigen Weiterbildungen wird die Heizeinrichtung ausgeschaltet oder die Leistung der Heizeinrichtung wird reduziert, wenn die Temperaturdifferenz zwischen den wenigstens zwei Temperatursensoren gleich null ist oder sich dem Wert null annähert. Dabei ist hierunter insbesondere das Endabschalten der Heizeinrichtung bzw. der Kochfeldeinrichtung zu verstehen. So kann das Endabschalten insbesondere dann erreicht werden, wenn ein Temperaturausgleich im Kochgeschirr vorliegt, sich anbahnt undloder eine gewisse Zeit bereits vorliegt.

Bevorzugt sind mehr als zwei Temperatursensoren vorgesehen, wobei die Temperaturdifferenzen zwischen den Temperatursensoren beim Einstellen der Leistung der Heizeinrichtung berücksichtigt werden. Bei mehreren Temperatursensoren kann auch ermittelt werden, welche Sensoren vom Gargut nicht beeinflusst werden, also außerhalb der Füllhöhe des Topfes liegen. Somit kann der Füllstand im Topf bzw. im Kochgeschirr ermittelt werden, wobei dann insbesondere die Temperaturen, die an den nicht bedeckten Temperatursensoren gemessen wird, nicht berücksichtigt werden. Bei mehreren nutzbaren Temperatursensoren können vorzugsweise die einzelnen Differenzen oder auch unterschiedliche Differenzen zwischen verschiedenen Sensoren zur gegenseitigen Validierung genutzt werden.

Besonders bevorzugt wird die Leistung der Heizeinrichtung über eine Fuzzy-Regelung eingestellt. Dabei können mit einem Fuzzy-Regler statt konkreter Werte linguistische Begriffe wie kalt, warm, heißt verwendet werden, die von einem menschlichen Experten für das Verfahren vorgegeben werden. Dadurch muss kein mathematisches Modell der Regelstrecke erstellt werden und der Regler lässt sich relativ einfach und vor allem auch für mehrere Ein- und Ausgangsgrößen entwickeln. Bei einem bevorzugten Kochverfahren kann die Temperaturdifferenz zwischen zwei Temperatursensoren beispielsweise mit klein und mittel bezeichnet und mit entsprechenden Leistungen geregelt werden. Ein Fuzzy-Regler eignet sich insbesondere dann gut, wenn nicht nur eine Temperaturdifferenz, sondern mehrere auf unterschiedlichen Höhen der Topfwand bzw. Wandung vorgesehene Sensoren betrachtet werden.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Figur 1: eine rein schematische Darstellung eines Kochsystems in einer perspektivischen Ansicht;
- Figur 2: eine rein schematische Darstellung eines Kochgeschirrs in einer Schnittansicht;
- Figur 3: eine rein schematische Darstellung des Temperaturverlaufs und des Leistungsverlaufs über die Zeit; und
- Figur 4: eine rein schematische Darstellung des Verlaufs der Temperaturdifferenz und des Leistungsverlaufs über die Zeit.

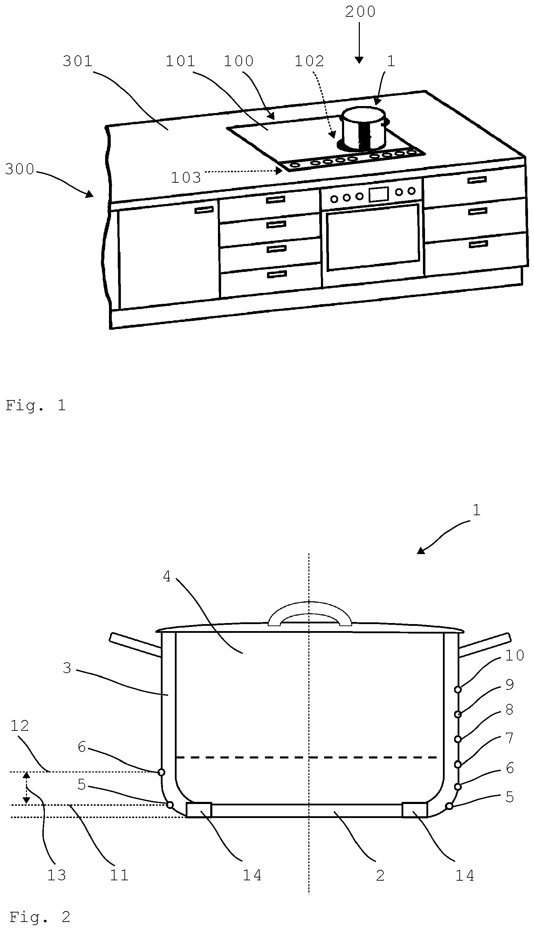

In Figur 1 ist rein schematisch ein Kochsystem 200 umfassend ein Kochgeschirr 1 und eine Kochfeldeinrichtung 100 in einer perspektivischen Ansicht dargestellt. Die Kochfeldeinrichtung 100 ist dabei in die Arbeitsfläche 301 einer Küchenzeile 300 integriert. Mit dem hier gezeigten Kochsystem 200 kann das Verfahren wie es zuvor beschrieben wurde durchgeführt werden.

Dazu umfasst das Kochgeschirr 1 zwei bzw. mehrere Temperatursensoren 5, 6, 7, 8, 9,10, welche in unterschiedlichen Höhen 11, 12 der Wandung 3 des Kochgeschirrs 100 zugeordnet sind. Die ermittelten Temperaturen an den entsprechenden Stellen der Wandung 3 des Kochgeschirrs 1 werden in dem hier gezeigten Ausführungsbeispiel an eine in Figur 1 nicht näher dargestellte Kommunikationseinrichtung 14 des Kochgeschirrs 1 übermittelt.

Die Kommunikationseinrichtung 14 ist dabei je nach Ausgestaltung dazu geeignet und ausgebildet ist, die ermittelten Rohdaten, prozessierte Daten oder auch direkt Regelsignale an die Steuereinrichtung 103 der Kochfeldeinrichtung 100 zu übermitteln. Über die empfangen Werte oder die Weiterverarbeitung von diesen Werten bzw. über die direkt empfangenen Regelsignale kann die Steuereinrichtung 103 die Leistung L der Heizeinrichtung 102 je nach Verfahren anpassen.

In Figur 2 ist rein schematisch ein Querschnitt durch ein Kochgeschirr 1 rein schematisch dargestellt. Dabei ist durch die gestrichelte Linie dargestellt, dass in Figur 2 zwei Ausführungsbeispiele eines Kochgeschirrs 1 dargestellt sind.

Dabei umfasst das Kochgeschirr 1 in beiden gezeigten Varianten einen Boden 2 und eine Wandung 3, wobei von dem Boden 2 und der Wandung 3 ein Aufnahmevolumen 4 begrenzt wird. In beiden Varianten ist ein erster Temperatursensor 5 vorgesehen, welcher in beiden gezeigten Fällen möglichst nah am Boden 2 des Kochgeschirrs 1 in einer ersten Höhe 11 bezogen auf den Boden 2 des Kochgeschirrs 1 angeordnet. Der zweite Sensor 6 ist in einer zweiten Höhe 12 mit einem vorbestimmten Abstand 13 zu dem ersten Temperatursensor 5 angeordnet. Dabei ist die zweite Höhe 12 bzgl. der vertikalen Erstreckung der Wandung 3 des Kochgeschirrs 1 weiter von dem Boden 2 entfernt als der erste Temperatursensor 5.

Bei der auf der rechten Seite der Figur 2 gezeigten Ausführungsform sind noch vier weitere Temperatursensoren 7, 8, 9, 10 über die vertikale Erstreckung der Wandung 3 des Kochgeschirrs 1 angeordnet.

In allen Ausgestaltungen ist bevorzugt, dass wenigstens zwei Temperatursensoren 5, 6 bzw. wenigstens die untersten beiden Temperatursensoren 5, 6 bei einer üblichen Befüllung des Kochgeschirrs 1 von dem in dem Kochgeschirr befindlichen Lebensmittel bedeckt sind, sodass wenigstens zwei unterschiedliche Temperaturen für wenigstens zwei Höhen 11, 12 gemessen werden.

In dem hier gezeigten Ausführungsbeispiel umfasst das Kochgeschirr 1 zudem eine Kommunikationseinrichtung 14, welche in Verbindung zu den Temperatursensoren 5, 6, 7, 8, 9, 10 steht. Die Kommunikationseinrichtung 14 steht je nach Ausführungsform in Kommunikation mit der Steuereinrichtung 103, wobei hierfür jede geeignete Datenübertragungsmethode gewählt werden kann. Beispielsweise kann eine Funkverbindung, oder auch eine Bluetooth-Verbindung vorgesehen sein. Die Energieversorgung für ein solches Kommunikationsmodul kann insbesondere bei der Verwendung eines Induktionskochfeldes als Kochfeldeinrichtung 100 induktiv erfolgen.

Je nach Ausgestaltung kann die Kommunikationseinrichtung 14 auch eine Auswerteeinrichtung umfassen, welche die empfangenen Temperaturdaten in Relation zueinander setzt oder direkt bestimmte Regelgrößen bereitstellt, welche an die Steuereinrichtung 103 der Kochfeldeinrichtung 100 übergeben werden.

Durch das Vorsehen von wenigstens zwei Temperatursensoren 5, 6 in unterschiedlichen Höhen 11, 12 kann beim Erwärmen eines Lebensmittels in einem Kochgeschirr 1 der Temperaturverlauf in unterschiedlichen Höhen ermittelt werden. Dabei liegen die Temperatursensoren 5, 6, 7, 8, 9, 10 vorzugsweise im Wesentlichen übereinander angeordnet bzw. sind entlang einer vertikalen Erstreckung der Wandung 3 des Kochgeschirrs 1 vorgesehen.

Erfindungsgemäß kann der Temperaturverlauf an den unterschiedlichen Temperatursensoren 5, 6, 7, 8, 9, 10, eine Temperatur an den Temperatursensoren 5, 6, 7, 8, 9, 1 zu einer bestimmten Zeit oder aber auch die Temperaturdifferenz zwischen den Temperatursensoren zu einem charakteristischen Zeitpunkt oder aber auch im Verlauf beurteilt werden.

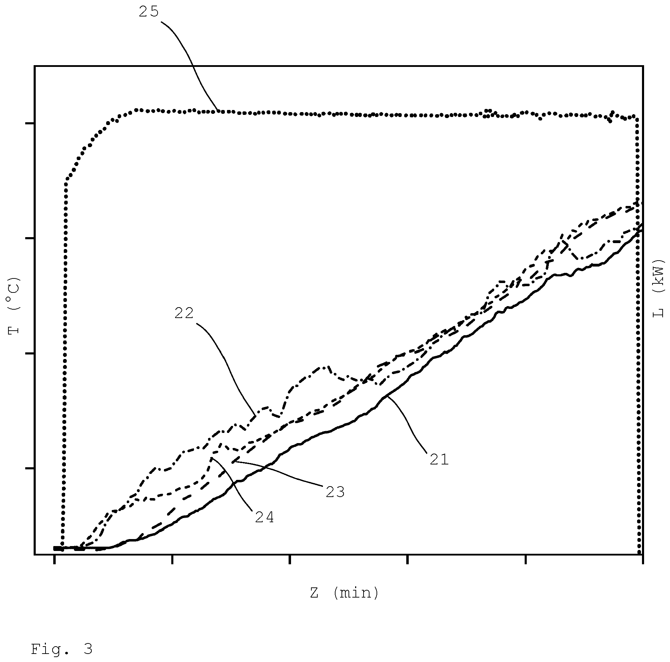

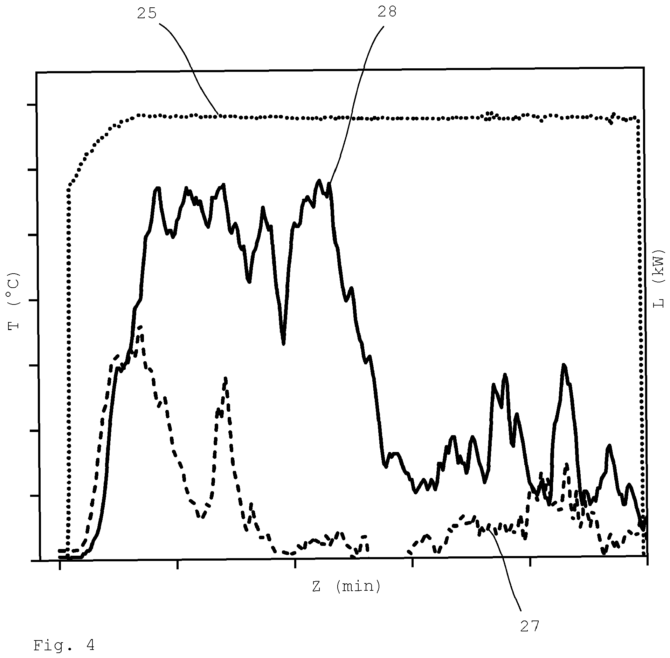

Hierdurch wird, wie nachfolgend näher erläutert, ein Rückschluss auf das Lebensmittel ermöglicht, nämlich in dem über den für ein Lebensmittel charakteristischen Verlauf der Temperaturkurven bzw. der Temperaturdifferenz zwischen den Temperatursensoren auf unterschiedlicher Höhe auf den Inhalt des Gargefäßes rückgeschlossen wird. Dieses Verfahren wird mit Bezug auf die Figuren 3 und 4 anhand des Beispiels der Temperaturverläufe von Milch und Wasser näher erläutert.

Dabei sieht man in Figur 3 die unterschiedlichen Temperaturverläufe bei dem Erhitzen von Milch und Wasser. Dabei sind hier jeweils die Temperaturverläufe jeweils des ersten Temperatursensors 5 und eines zweiten Temperatursensors 5 für Milch und Wasser zusammen mit der Leistung gegen die Zeit aufgetragen. Die Leistung ist dargestellt durch eine gepunktete Linie 25.

Die durchgezogene Linie 21 zeigt dabei den Temperaturverlauf des zweiten bzw. oberen Temperatursensors 6 bei einem Aufwärmen von Milch. Der Temperaturverlauf des unteren bzw. ersten Temperatursensors 5 ist durch die gestrichelt und gepunktete Linie 22 dargestellt.

Der Temperaturverlauf des oberen bzw. zweiten Temperatursensors 6 bei einem Aufwärmen von Wasser ist durch die gröber gestrichelte Linie 23 dargestellt. Der Temperaturverlauf des ersten bzw. unteren Temperatursensors 5 bei einem Aufwärmen von Wasser ist durch die feiner gestellte Linie 24 dargestellt.

Anhand der Temperaturverläufe der beiden Temperatursensoren 5, 6 für Milch und Wasser kann man erkennen, dass gerade zu Beginn des Aufwärmprozesses ein größerer Unterschied zwischen den Temperatursensoren 5 und 6 beim Erwärmen von Milch zu erkennen ist.

Dies liegt daran, dass die Temperaturverläufe je nach Viskosität, Fettgehalt und sonstigen Eigenschaften des zu erwärmenden Lebensmittels teils extrem unterschiedlich aussehen können. Bei Wasser liegt zum Beispiel ein sehr wenig viskoses Medium vor, welches einen sehr gleichmäßigen und dementsprechend relativ schnellen Wärmeübergang und somit Wärmeausgleich aufweist.

Milch ist ein viskoseres Medium, welches durch den relativ hohen Fettgehalt zunächst einen relativ geringeren Wärmeübergang aufweist, bis sich die Fettmoleküle in der Milch lösen. Dies führt zu einem späteren Zeitpunkt zu einer Angleichung der Temperaturen zwischen den von dem ersten Temperatursensor 5 und dem zweiten Temperatursensor 6 erfassten Bereichen.

Somit ist hier an dem Beispiel von Wasser und Milch mich gezeigt, dass die Temperaturverläufe der unterschiedlichen Sensoren 5, 6, 7, 8, 9, 10 bei unterschiedlichen Lebensmitteln, hier bei Milch und Wasser, unterschiedlich und durchaus charakteristisch ausersehen. Über den Verlauf der Temperatur über eine vorbestimmte Zeit oder auch über Einzelwerte der Temperaturen der einzelnen Temperatursensoren 5, 6, 7, 8, 9, 10 zu einem charakteristischen Zeitpunkt und/oder auch die Temperaturdifferenz zwischen den Temperatursensoren 5, 6, 7, 8, 9, 10 über den Verlauf oder zu einem vorbestimmten charakteristischen Zeitpunkt können somit Aufschluss über ein bestimmtes Produkt im Kochgeschirr 1 geben.

Dabei liegen die Kurven umso weiter zu Beginn auseinander, je viskoser der Inhalt des Kochgeschirrs ist. Als Extrembeispiele für sonst schlecht erhitzbare Lebensmittel können hier beispielsweise passierte Tomaten und auch gebundenes Saucen genannt werden.

Allgemein kommt es immer auch darauf an, von welcher Ausgangstemperatur der Aufwärmprozess gestartet wird. Dabei sind bei Produkten aus dem Kühlschrank die Kurven je nach Ausgestaltung bzw. Eigenschaft der Lebensmittel noch einmal deutlich unterschiedlich zu bereits vorgewärmten bzw. auf Zimmertemperatur vortemperierten Lebensmitteln.

In Figur 4 ist rein schematisch die Temperaturdifferenz K zwischen dem ersten Sensor 5 und dem zweiten Temperatursensor 6 für Milch und Wasser zusammen mit der Leistung gegen die Zeit aufgetragen. Die Leistung ist dargestellt durch eine gepunktete Linie 26. Dabei ist eine gleichmäßige Leistung L vorgesehen, welche über die Zeit Z auf das Kochgeschirr 1 bzw. auf den Boden 2 des Kochgeschirrs 1 wirkt.

Hier ist zu erkennen, dass bei Wasser die Temperaturdifferenz K insbesondere zu Beginn eines Aufwärmvorgangs wesentlich geringer ist als bei Milch, wobei der Verlauf der Temperaturdifferenz K bei Wasser durch die gestrichelte Linie 27 dargestellt ist und der Verlauf der Temperaturdifferenz K bei Milch über die durchgezogene Linie 28 dargestellt ist.

Es ist zu erkennen, dass trotz der gleichmäßig anliegenden Leistung teils nicht unerhebliche Temperaturschwankungen im Verlauf der Temperaturdifferenzen K zwischen den beiden Temperatursensoren 5, 6 entstehen.

Bei der Temperaturdifferenz K von Wasser kommt es zum Beispiel auch zu dem Fall, dass eine höhere Temperatur an dem oberen Temperatursensor 6 vorliegt. Dies resultiert daraus, dass der Inhalt des Kochgeschirrs 1 vom Boden 2 her erwärmt wird, wobei über den Wärmeausgleich die Temperatur sich nach oben hin ausgleicht. Zu einem bestimmten Zeitpunkt kann es dazu kommen, dass durch die durch den Wärmeaustausch resultierende Durchmischung der Flüssigkeit sich weiter oben befindliches kälteres Wasser nach unten bewegt, wodurch es eventuell kurzzeitig zu der Messung einer geringeren Temperatur am unteren Temperatursensor 5 kommen kann.

Wie bei dem Vergleich der Kurven für Milch und Wasser zu erkennen ist, kann der Verlauf der Temperaturdifferenz K charakteristisch für ein Lebensmittel sein. Somit kann durch das Erfassen einer solchen Kurve der Temperaturdifferenz K der Inhalt des Kochgeschirrs 1 erkannt werden.

In dem erfindungsgemäßen Verfahren kann eine Anpassung der Leistung der Heizeinrichtung 103 durch die Steuereinrichtung 3 vorgenommen werden, wobei hierfür die Temperaturen an den Temperatursensoren 5, 6, 7, 8, 9, 10 undloder die Temperaturdifferenz berücksichtigt werden. Dies auch kann zusätzlich zu der Erkennung von Lebensmitteln erfolgen.

Bei einem solchen Verfahren kann beispielsweise der Aufwärmprozess mit einer vorbestimmten Leistung L der Heizeinrichtung 102 begonnen werden. Wird dann beispielsweise ein erster Schwellwert S1 einer Temperaturdifferenz K zwischen zwei Temperatursensoren 5, 6, 7, 8, 9, 10 ermittelt, kann beispielsweise die Leistung herabgesetzt werden, bis die Temperaturdifferenz zwischen den beiden Temperatursensoren 5, 6, 7, 8, 9, 10 auf einen zweiten Schwellwert S2 abgesunken ist. Anschließend kann erneut mit einer höheren Leistung der Prozess fortgesetzt werden, bis der erste Schwellwert S1 wieder erreicht wird usw..

Je nach Ausgestaltung kann die Regelung des Kochprozesses aber auch über eine PID-Regelung erfolgen, wobei die Schwellwerte bzw. die Leistung der Heizeinrichtung 103 kontinuierlich angepasst werden.

Auch eine Fuzzy-Regelung kann mit der Ausgestaltung von Kochsystem 200 und Kochgeschirr 1 vorgenommen werden.

Insgesamt kann einer solchen Regelung erreicht werden, dass der Inhalt eines Kochgeschirrs 1 automatisch erwärmt bzw. erhitzt wird, ohne dass das Lebensmittel in dem Kochgeschirr ansetzt oder sogar anbrennt. Dies kann insbesondere durch eine entsprechende Anpassung der Schwellwerte je nach Lebensmittel erreicht werden, Dabei kann das entsprechende Lebensmittel je nach Ausgestaltung automatisch durch das zuvor beschriebene Verfahren erkannt werden oder aber durch einen Benutzer vorgegeben werden.

### Bezugszeichenliste

- 1: Kochgeschirr
- 2: Boden
- 3: Wandung
- 4: Aufnahmevolumen
- 5: erster Temperatursensor
- 6: Temperatursensor
- 7: Temperatursensor
- 8: Temperatursensor
- 9: Temperatursensor
- 10: Temperatursensor
- 11: Höhe
- 12: Höhe
- 13: Abstand
- 14: Kommunikationseinrichtung

- 21: Durchgezogene Linie (Temperaturverlauf zweiter Temperatursensor bei Milch)
- 22: Gepunktete Linie (Temperaturverlauf erster Temperatursensor bei Milch)
- 23: Gröber gestrichelte Linie (Temperaturverlauf zweiter Temperatursensor bei Wasser)
- 24: Feiner gestellte Linie (Temperaturverlauf erster Temperatursensor bei Wasser)
- 25: Gepunktete Linie (Leistung)
- 26: Gepunktete Linie (Leistung)
- 27: Gestrichelte Linie (Temperaturdifferenz K bei Wasser)
- 28: Durchgezogene Linie (Temperaturdifferenz K bei Milch)

- 100: Kochfeldeinrichtung
- 101: Aufstellfläche
- 102: Heizeinrichtung
- 103: Steuereinrichtung

- 200: Kochsystem

- 300: Küchenzeile
- 301: Arbeitsfläche

- K: Temperaturdifferenz
- T: Temperatur
- L: Leistung
- S1: Schwellwert
- S2: Schwellwert

## Patentansprüche

1. Verfahren zum Betreiben eines Kochsystems (200) umfassend wenigstens ein Kochgeschirr (1) und wenigstens eine Kochfeldeinrichtung (100),
wobei die Kochfeldeinrichtung (100) wenigstens eine Aufstellfläche (101) zum Aufstellen von Kochgeschirr (1), wenigstens eine Heizeinrichtung (102) und wenigstens eine Steuereinrichtung (103) umfasst, und
wobei das Kochgeschirr (1) wenigstens einen Boden (2) und wenigstens eine Wandung (3) umfasst,
wobei durch den Boden (2) und die Wandung (3) wenigstens ein Aufnahmevolumen (4) begrenzt wird und
wobei wenigstens zwei Temperatursensoren (5, 6, 7, 8, 9, 10) der Wandung (3) zugeordnet sind,
wobei ein erster Temperatursensor (5) in einer ersten Höhe (11) vorgesehen ist und
wobei ein zweiter Temperatursensor (6, 7, 8, 9, 10) in einer zweiten Höhe (12) mit einem vorbestimmten Abstand (13) zu dem ersten Temperatursensor (5) vorgesehen ist,
**gekennzeichnet durch** die folgenden Schritte in geeigneter Anzahl und Reihenfolge:
- Beheizen des Kochgeschirrs (1) mit vorbestimmten Leistung (L) der Heizeinrichtung (1) bis ein vorbestimmter erster Schwellwert (S1) einer Temperaturdifferenz (K) zwischen wenigstens zwei Temperatursensoren (5, 6, 7, 8, 9, 10) erreicht wird;
- reduzieren der Leistung (L) der Heizeinrichtung bis ein vorbestimmter zweiter Schwellwert (S2) einer Temperaturdifferenz (K) zwischen wenigstens zwei Temperatursensoren (5, 6, 7, 8, 9, 10) erreicht wird.

2. Verfahren nach dem vorhergehenden Anspruch, **dadurch gekennzeichnet, dass** die Leistung (L) der Heizeinrichtung zwischen zwei vorbestimmten Leistungen (L) beim Erreichen von einem oder beiden der Schwellwerte (S1, S2) umgeschaltet wird.

3. Verfahren nach einem der beiden vorhergehenden Ansprüche, **dadurch gekennzeichnet, dass** die Leistung (L) der Heizeinrichtung wenigstens zeitweise im Wesentlichen kontinuierlich eingestellt wird.

4. Verfahren nach einem der Ansprüche 1 bis 3, **dadurch gekennzeichnet, dass** wenigstens ein Schwellwert (S1, S2) anhand eines eingestellten undloder erkannten Lebensmittels angepasst wird.

5. Verfahren nach einem der Ansprüche 1 bis 4, **dadurch gekennzeichnet, dass** die Heizeinrichtung (102) ausgeschaltet wird oder die Leistung (L) der Heizeinrichtung (102) reduziert wird, wenn die Temperaturdifferenz (K) zwischen den wenigstens zwei Temperatursensoren (5, 6, 7, 8, 9, 10) gleich Null ist oder sich dem Wert Null annähert.

6. Verfahren nach einem der Ansprüche 1 bis 5, **dadurch gekennzeichnet, dass** mehr als zwei Temperatursensoren (5, 6, 7, 8, 9, 10) vorgesehen sind und dass die Temperaturdifferenzen (K) zwischen den Temperatursensoren (5, 6, 7, 8, 9, 10) beim Einstellen der Leistung (L) der Heizeinrichtung (102) berücksichtig werden.

7. Verfahren nach einem der Ansprüche 1 bis 6, **dadurch gekennzeichnet, dass** die Leistung (L) der Heizeinrichtung über eine Fuzzy-Regelung eingestellt wird.

8. Kochsystem (200) umfassend
wenigstens ein Kochgeschirr (1) und
wenigstens eine Kochfeldeinrichtung (100),
wobei die Kochfeldeinrichtung (100) wenigstens eine Aufstellfläche (101) zum Aufstellen von Kochgeschirr (1), wenigstens eine Heizeinrichtung (102) und wenigstens eine Steuereinrichtung (103) umfasst,
wobei das Kochgeschirr (1) wenigstens einen Boden (2) und wenigstens eine Wandung (3) umfasst, wobei durch den Boden (2) und die Wandung (3) wenigstens ein Aufnahmevolumen (4) begrenzt wird und wobei wenigstens zwei Temperatursensoren (5, 6, 7, 8, 9, 10) der Wandung (3) zugeordnet sind, wobei ein erster Temperatursensor (5) in einer ersten Höhe (11) vorgesehen ist und wobei ein zweiter Temperatursensor (6, 7, 8, 9, 10) in einer zweiten Höhe (12) mit einem vorbestimmten Abstand (13) zu dem ersten Temperatursensor (5) vorgesehen ist,
**dadurch gekennzeichnet, dass**
die Steuereinrichtung (103) geeignet und ausgebildet ist das Verfahren nach einem der Ansprüche 1 bis 7 auszuführen.

9. Kochsystem nach Anspruch 8, wobei
die Steuereinrichtung (103) der Kochfeldeinrichtung (100) mit einer Kommunikationseinrichtung (14) des Kochgeschirrs (1) in Verbindung steht.

## Claims

1. Method for operating a cooking system (200) comprising at least one cooking utensil (1) and at least one hob device (100), the hob device (100) comprising at least one support surface (101) for placing cooking utensils (1) on, at least one heating device (102) and at least one control device (103), and
the cooking utensil (1) comprising at least one base (2) and at least one wall (3),
at least one receiving volume (4) being delimited by the base (2) and the wall (3) and
at least two temperature sensors (5, 6, 7, 8, 9, 10) being assigned to the wall (3),
a first temperature sensor (5) being provided at a first height (11) and a second temperature sensor (6, 7, 8, 9, 10) being provided at a second height (12) at a predetermined distance (13) from the first temperature sensor (5), **characterised by** the following steps in a suitable number and order:
- heating the cooking utensil (1) at a predetermined power (L) of the heating device (1) until a predetermined first threshold value (S1) of a temperature difference (K) between at least two temperature sensors (5, 6, 7, 8, 9, 10) is reached;
- reducing the power (L) of the heating device until a predetermined second threshold value (S2) of a temperature difference (K) between at least two temperature sensors (5, 6, 7, 8, 9, 10) is reached.

2. Method according to the preceding claim, **characterised in that** the power (L) of the heating device is switched between two predetermined powers (L) when one or both of the threshold values (S1, S2) are reached.

3. Method according to either of the two preceding claims,
**characterised in that** the power (L) of the heating device is adjusted substantially continuously at least some of the time.

4. Method according to any of claims 1 to 3, **characterised in that** at least one threshold value (S1, S2) is adapted based on a set and/or recognised food.

5. Method according to any of claims 1 to 4, **characterised in that** the heating device (102) is switched off or the power (L) of the heating device (102) is reduced when the temperature difference (K) between the at least two temperature sensors (5, 6, 7, 8, 9, 10) is equal to zero or approaches zero.

6. Method according to any of claims 1 to 5, **characterised in that** more than two temperature sensors (5, 6, 7, 8, 9, 10) are provided **and in that** the temperature differences (K) between the temperature sensors (5, 6, 7, 8, 9, 10) are taken into account when adjusting the power (L) of the heating device (102).

7. Method according to any of claims 1 to 6, **characterised in that** the power (L) of the heating device is adjusted via a fuzzy control.

8. Cooking system (200) comprising
at least one cooking utensil (1) and
at least one hob device (100),
the hob device (100) comprising at least one support surface (101) for placing cooking utensils (1) on, at least one heating device (102) and at least one control device (103),
the cooking utensil (1) comprising at least one base (2) and at least one wall (3), at least one receiving volume (4) being delimited by the base (2) and the wall (3) and at least two temperature sensors (5, 6, 7, 8, 9, 10) being assigned to the wall (3), a first temperature sensor (5) being provided at a first height (11) and a second temperature sensor (6, 7, 8, 9, 10) being provided at a second height (12) at a predetermined distance (13) from the first temperature sensor (5),
**characterised in that**
the control device (103) is suitable and designed for carrying out the method according to any of claims 1 to 7.

9. Cooking system according to claim 8, wherein
the control device (103) of the hob device (100) is connected to a communication device (14) of the cooking utensil (1).

## Revendications

1. Procédé permettant de faire fonctionner un système de cuisson (200) comprenant au moins un ustensile de cuisson (1) et au moins un dispositif formant plaque de cuisson (100), dans lequel le dispositif formant plaque de cuisson (100) comprend au moins une surface de mise en place (101) pour la mise en place de l'ustensile de cuisson (1), au moins un dispositif de chauffage (102) et au moins un dispositif de commande (103), et
dans lequel l'ustensile de cuisson (1) comprend au moins un fond (2) et au moins une paroi (3),
dans lequel au moins un volume de réception (4) est délimité par le fond (2) et la paroi (3) et
dans lequel au moins deux capteurs de température (5, 6, 7, 8, 9, 10) sont associés à la paroi (3),
dans lequel un premier capteur de température (5) est prévu à une première hauteur (11) et dans lequel un second capteur de température (6, 7, 8, 9, 10) est prévu à une seconde hauteur (12) à une distance (13) prédéterminée du premier capteur de température (5), **caractérisé par** les étapes suivantes en nombre et en ordre appropriés :
- chauffage de l'ustensile de cuisson (1) avec une puissance (L) prédéterminée du dispositif de chauffage (1) jusqu'à ce qu'une première valeur seuil (S1) prédéterminée d'une différence de température (K) entre au moins deux capteurs de température (5, 6, 7, 8, 9, 10) soit atteinte ;
- réduction de la puissance (L) du dispositif de chauffage jusqu'à ce qu'une seconde valeur seuil (S2) prédéterminée d'une différence de température (K) entre au moins deux capteurs de température (5, 6, 7, 8, 9, 10) soit atteinte.

2. Procédé selon la revendication précédente, **caractérisé en ce que** la puissance (L) du dispositif de chauffage est commutée entre deux puissances (L) prédéterminées lors de l'atteinte d'une ou des deux valeurs seuil (S1, S2).

3. Procédé selon l'une des deux revendications précédentes,
**caractérisé en ce que** la puissance (L) du dispositif de chauffage est réglée au moins temporairement de manière sensiblement continue.

4. Procédé selon l'une des revendications 1 à 3, **caractérisé en ce qu'**au moins une valeur seuil (S1, S2) est adaptée en fonction d'un produit alimentaire réglé et/ou détecté.

5. Procédé selon l'une des revendications 1 à 4, **caractérisé en ce que** le dispositif de chauffage (102) est mis hors tension ou la puissance (L) du dispositif de chauffage (102) est réduite lorsque la différence de température (K) entre les au moins deux capteurs de température (5, 6, 7, 8, 9, 10) est égale à zéro ou s'approche de la valeur zéro.

6. Procédé selon l'une des revendications 1 à 5, **caractérisé en ce que** plus de deux capteurs de température (5, 6, 7, 8, 9, 10) sont prévus **et en ce que** les différences de température
(K) entre les capteurs de température (5, 6, 7, 8, 9, 10) sont prises en compte lors du réglage de la puissance (L) du dispositif de chauffage (102).

7. Procédé selon l'une des revendications 1 à 6, **caractérisé en ce que** la puissance (L) du dispositif de chauffage est réglée par l'intermédiaire d'une régulation à logique floue.

8. Système de cuisson (200) comprenant
au moins un ustensile de cuisson (1) et
au moins un dispositif formant plaque de cuisson (100),
dans lequel le dispositif formant plaque de cuisson (100) comprend au moins une surface de mise en place (101) pour la mise en place de l'ustensile de cuisson (1), au moins un dispositif de chauffage (102) et au moins un dispositif de commande (103),
dans lequel l'ustensile de cuisson (1) comprend au moins un fond (2) et au moins une paroi (3), dans lequel au moins un volume de réception (4) est délimité par le fond (2) et la paroi (3), et dans lequel au moins deux capteurs de température (5, 6, 7, 8, 9, 10) sont associés à la paroi (3), dans lequel un premier capteur de température (5) est prévu à une première hauteur (11) et dans lequel un second capteur de température (6, 7, 8, 9, 10) est prévu à une seconde hauteur (12) à une distance (13) prédéterminée du premier capteur de température (5),
**caractérisé en ce que**
le dispositif de commande (103) est approprié et configuré pour mettre en oeuvre le procédé selon l'une des revendications 1 à 7.

9. Système de cuisson selon la revendication 8, dans lequel
le dispositif de commande (103) du dispositif formant plaque de cuisson (100) est connecté à un dispositif de communication (14) de l'ustensile de cuisson (1).
